# EUROPEAN PATENT SPECIFICATION

(11) **EP 1 757 040 B1**
(45) Date of publication and mention of the grant of the patent: **30.07.2014**
(21) Application number: 05746510.6
(22) Date of filing: 06.05.2005
(51) Int. Cl.: H04W 88/06

(54) **OPEN AND EXTENSIBLE FRAMEWORK FOR UBIQUITOUS RADIO MANAGEMENT AND SERVICES IN HETEROGENEOUS WIRELESS NETWORKS**
OFFENER UND ERWEITERBARER RAHMEN FÜR UBIQUITÄRE FUNKVERWALTUNG UND DIENSTE IN HETEROGENEN DRAHTLOSEN NETZWERKEN
ARCHITECTURE OUVERTE ET EXTENSIBLE DE GESTION RADIO ET DE SERVICES UBIQUISTES DANS DES RESEAUX HETEROGENES SANS FIL

(30) Priority: 27.05.2004 US 856404
(43) Date of publication of application: 28.02.2007
(73) Proprietor: Intel Corporation, Santa Clara, CA 95052 (US)
(72) Inventor: GUPTA, Vivek, Portland, OR 97229 (US); MACIOCCO, Christian, Tigard, OR 97223 (US); BELL, Carol, Beaverton, OR 97007 (US); FENGER, Russell, Beaverton, OR 97007 (US); HEGDE, Shriharsha, Beaverton, OR 97006 (US); KULKARNI, Amol, Hillsboro, OR 97124 (US)
(74) Representative: Dunlop, Hugh Christopher
(86) International application number: PCT/US2005/016103
(87) International publication number: WO 2005/119988

(56) References cited:
- EP-A- 1 117 266
- WO-A-2004/032535
- US-A1- 2003 108 062
- US-A1- 2004 022 216

## Description

### BACKGROUND

### DESCRIPTION OF THE RELATED ART

In advancing wireless technology, a single device may be able to communicate over two or more different kinds of wireless links. Each of these links may implement a different wireless air link protocol, and distinct types of hardware and software may be used to support the various protocols. The networks formed by the different types of links are considered heterogeneous networks, meaning that the hardware and software associated with one of the links cannot typically be used to make connections across another link. The choice of which communication link to use may be determined based on proximity to an access point, strength of a signal, available bandwidth, user or service provider based policies, and other such conditions.

US2003108062 describes a system pertaining to the features of the preamble of the independent claims.

### SUMMARY

The invention is defined in the independent claims. Embodiments of the invention are defined in the dependent claims.

### BRIEF DESCRIPTION OF THE DRAWINGS

The present invention may be better understood, and its numerous features and advantages made apparent to those skilled in the art by referencing the accompanying drawings.
FIG. 1 illustrates a block diagram of a wireless system with multiple heterogeneous networks according to an embodiment of the present invention.
FIG. 2 illustrates portions of a wireless device with components of an adaptive radio architecture to support heterogeneous wireless networks according to an embodiment of the present invention.
FIG. 3 illustrates an example of a radio information model according to an embodiment of the present invention.
FIG. 4 illustrates a flow diagram according to an embodiment of the present invention.

The use of the same reference symbols in different drawings indicates similar or identical items.

### DESCRIPTION OF THE EMBODIMENT(S)

In the following description, numerous specific details are set forth. However, it is understood that embodiments of the invention may be practiced without these specific details. In other instances, well-known methods, structures and techniques have not been shown in detail in order not to obscure an understanding of this description.

References to "one embodiment," "an embodiment," "example embodiment," "various embodiments," and the like, indicate that the embodiment(s) of the invention so described may include a particular feature, structure, or characteristic, but not every embodiment necessarily includes the particular feature, structure, or characteristic. Further, repeated use of the phrase "in one embodiment" does not necessarily refer to the same embodiment, although it may.

As used herein, unless otherwise specified the use of the ordinal adjectives "first," "second," "third," and the like, to describe a common object, merely indicate that different instances of like objects are being referred to, and are not intended to imply that the objects so described must be in a given sequence, either temporally, spatially, in ranking, or in any other manner.

Unless specifically stated otherwise, as apparent from the following discussions, it is appreciated that throughout the specification discussions utilizing terms such as "processing," "computing," "calculating," or the like, refer to the action and/or processes of a computer or computing system, or similar electronic computing device, that manipulate and/or transform data represented as physical, such as electronic, quantities into other data similarly represented as physical quantities.

In a similar manner, the term "processor" may refer to any device or portion of a device that processes electronic data from registers and/or memory to transform that electronic data into other electronic data that may be stored in registers and/or memory. A "computing platform" may comprise one or more processors.

Types of wireless communication systems intended to be within the scope of the present invention include, although not limited to, Wireless Local Area Network (WLAN), Wireless Wide Area Network (WWAN), Wireless Personal Area Network (WPAN), Wireless Metropolitan Area Network (WMAN), Code Division Multiple Access (CDMA) cellular radiotelephone communication systems, Global System for Mobile Communications (GSM) cellular radiotelephone systems, North American Digital Cellular (NADC) cellular radiotelephone systems, Time Division Multiple Access (TDMA) systems, Extended-TDMA (E-TDMA) cellular radiotelephone systems, third generation

(3G) systems like Wide-band CDMA (WCDMA), CDMA-2000, Universal Mobile Telecommunications System (UMTS), and the like, although the scope of the invention is not limited in this respect.

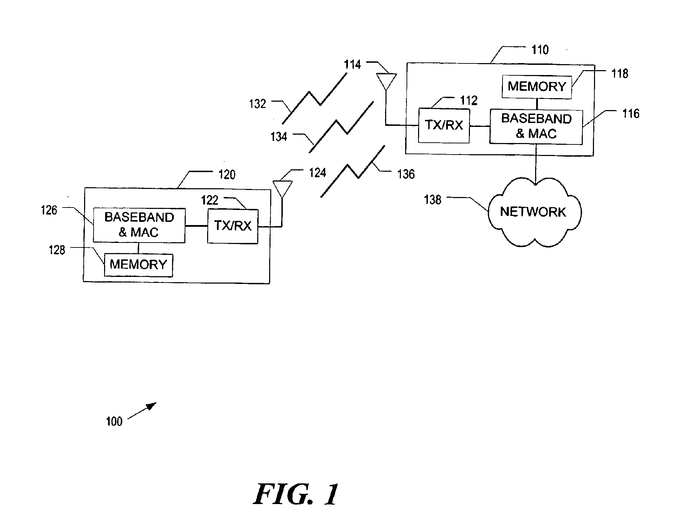

FIG. 1 illustrates a block diagram of a wireless system with multiple wireless networks according to an embodiment of the present invention. In the wireless system 100 shown in FIG. 1, a first device 110 may include a wireless transceiver 112 to couple to an antenna 114 and to a baseband processor 116. Baseband processor 116 in one embodiment may include a single processor, or alternatively may include a baseband processor and an applications processor, although the scope of the invention is not limited in this respect. Baseband processor 116 may couple to a memory 118 which may include volatile memory such as DRAM, non-volatile memory such as flash memory, or alternatively may include other types of storage such as a hard disk drive, although the scope of the invention is not limited in this respect. Some portion or all of memory 118 may be included on the same integrated circuit as baseband processor 116, or alternatively some portion or all of memory 118 may be disposed on an integrated circuit or other medium, for example a hard disk drive, that is external to the integrated circuit of baseband processor 116, although the scope of the invention is not limited in this respect.

First device 110 communicates to a second device 120, at least one of which may be a mobile unit (MU). Second device 120 may include a transceiver 122, antenna 124, baseband processor 126, and memory 128. In some embodiments, first device 110 and second device 120 may transmit and/or receive one or more packets over wireless system 100 via antennas 114 and 124. Alternatively, first device 110 and second device 120 may include two or more antennas to provide a diversity antenna arrangement, to provide spatial division multiple access (SDMA), or to provide a multiple input, multiple output (MIMO) system, or the like, although the scope of the invention is not limited in this respect. The packets may include data, control messages, network information, and the like.

First device 110 and second device 120 may be any of various devices, such as a cellular telephone, wireless telephone headset, printer, wireless keyboard, mouse, wireless network interface devices and network interface cards (NICs), base stations, access points (APs), gateways, bridges, hubs, cellular radiotelephone communication systems, satellite communication systems, two-way radio communication systems, one-way pagers, two-way pagers, personal communication systems (PCS), portable or stationary personal computers (PCs), personal digital assistants (PDAs), software defined radios, reconfigurable radios, or other device capable of communicating over a wireless network. Additionally or alternatively, in other embodiments of the present invention, wireless communication system 100 may include additional devices, any of which may be mobile units.

First device 110 may couple with network 138 so that first device 110 and second device 120 may communicate with network 138, including devices coupled to network 138. Network 138 may include a public network such as a telephone network or the Internet, or alternatively network 138 may include a private network such as an intranet, or a combination of a public and a private network, although the scope of the invention is not limited in this respect.

First device 110 and second device 120 may communicate to each other via one of multiple wireless communication links, for example links 132, 134, and 136. Each of these links may implement a different wireless air link protocol and therefore a different wireless network, and distinct types of hardware and software may be used to support the various protocols. For example, transceiver 112 and antenna 114 may include multiple transceivers and antennas for communicating via the multiple wireless communication links. The choice of which communication link to use may be determined based on proximity to the other device, strength of a signal, available bandwidth, cost of wireless spectrum, user or system level policies, and other such conditions.

Links 132, 134, and 136 may be implemented in accordance with various wireless standards including, for example, one or more wireless cellular standards, one or more wireless networking standards, one or more radio frequency identification (RFID) standards, and/or others. The different networks formed by links 132, 134, and 136 are considered heterogeneous networks, meaning that the hardware and software associated with one of the links cannot typically be used to make connections across another link. In at least one implementation, for example, at least one link is implemented in accordance with the Bluetooth short range wireless protocol (Specification of the Bluetooth System, Version 1.2, Bluetooth SIG, Inc., November 2003, and related specifications and protocols). Other possible wireless networking standards include, for example: IEEE 802.11 (ANSI/IEEE Std 802.11-1999 Edition and related standards), HIPERLAN 1, 2 and related standards developed by the European Telecommunications Standards Institute (ETSI) Broadband Radio Access Networks (BRAN), HomeRF (HomeRF Specification, Revision 2.01, The HomeRF Technical Committee, July, 2002 and related specifications), and/or others.

First device 110 and second device 120 each support multiple types of wireless interfaces. In an alternate embodiment, only first device 110 supports multiple types of wireless interfaces, second device 120 supports one type, and other devices (not shown) support other types.

According to an embodiment of the present invention, to support multiple types of wireless technologies an adaptive radio architecture (ARA) is used. The ARA framework is designed to support one or more discrete and/or reconfigurable radio devices supporting a variety of wireless protocols. Supporting the devices and protocols involve a wide, often complex, array of information. The information may be difficult to access, may be organized differently, and referred to by different names across the multiple devices and protocols. Moreover, methods to obtain this information vary across hardware platform and operating systems, adding more complexity to application code portability. In order to manage the various information effectively, the ARA organizes a number of lower-level interface attributes of wireless devices and protocols into abstracted attributes for drivers, higher-level radio services, middleware services, mobile applications of management entities. Because the multiple radios work independently, managing the radios collectively without ARA to provide optimal experience in terms of power, cost, interference management, fast-handoff, end-user application behavior, and the like is cumbersome for an application, middleware entity, or driver.

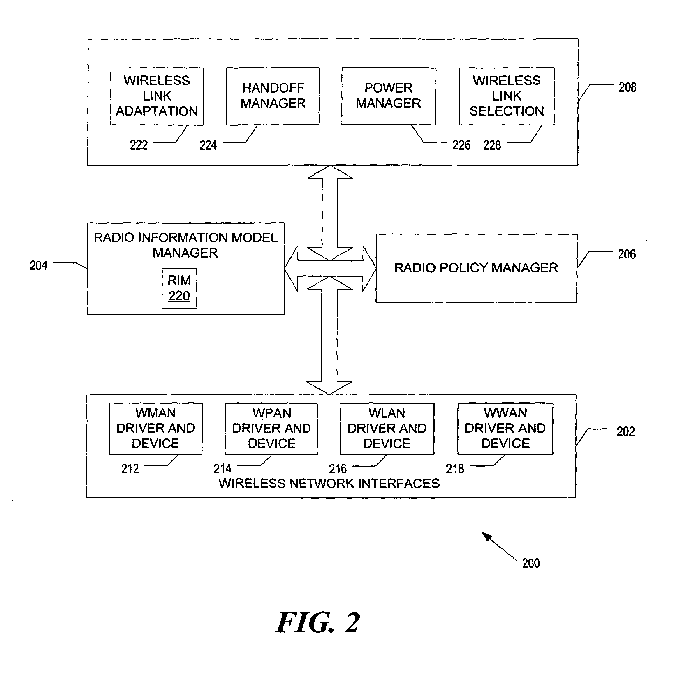

FIG. 2 illustrates portions of a wireless device with an adaptive radio architecture to support heterogeneous wireless networks according to an embodiment of the present invention. In one embodiment, wireless device 200 includes wireless network interfaces 202, a radio information model manager (RIMM) 204, a radio policy manager (RPM) 206, and radio services 208.

Wireless network interfaces 202 include multiple interfaces, for example, a wireless metropolitan area network (WMAN) driver and device interface 212, a wireless personal area network (WPAN) driver and device interface 214, a wireless local area network (WLAN) driver and device interface 216, a wireless wide area network (WWAN) driver and device interface 218, and other such wireless interfaces.

RIMM 204 includes a radio information model (RIM) 220. RIM 220 abstracts attributes of network interfaces 202 in a consistent manner across the multiple protocols and devices. Through RIMM 204, radio services 208 and other higher layer applications (not shown) can request and obtain the abstracted attributes without needing specific knowledge of the different protocols or devices. RIM 220 may be platform and implementation independent facilitating the re-use of applications and radio services across platforms and operating systems. RIMM 204 may provide RIM 220 as a set of application programming interfaces (APIs) that radio services 208 and the other higher layer applications use to access abstracted attributes described in RIM 220. Providers of radio information, such as network interfaces 202, register with RIMM 204 providing access requirements for their specific interface attributes. Alternatively, RIMM 204 enumerates the wireless devices to simulate a RIM 220 enabled device to provide backward compatibility.

RPM 206 provides an efficient rule-based monitoring service of the abstracted attributes defined in RIM 220, easing radio services 208 and the other higher layer applications of the burden of monitoring radio attributes. RPM 206 uses policy-based management to dynamically configure any service or device. Policies are installed by a client component into RPM 206. RPM 206 uses these policies to dynamically configure the target component, for example, one of radio interfaces 202. One example of a higher layer policy includes selecting an interface that provides the best connectivity based on user specified preferences if connectivity can be provided to multiple wireless networks. Other examples of higher layer policies include wireless link adaptation to select, for example, a link with highest throughput or a link with best latency, hand-off triggering, power management, co-existence management and the like.

Radio services 208 include wireless link adaptation unit 222, handoff manager 224, power manager 226, and wireless link selection unit 228. Wireless link adaptation unit 222 directs RPM 206 to adapt link level parameters like packet fragmentation size, channel and/or access point selection, and the like to provide optimum link level performance under different wireless network conditions. Handoff manager 224 uses intelligent triggers provided by RPM 206 to initiate handoffs across heterogeneous networks based on changes in wireless link parameters. Power manager 226 use the most power efficient radio based on, for example, the current radio frequency (RF) environment, application load (packet load) and mobile device state such as remaining battery level or other such states.

Wireless link selection unit 228 aids applications to choose an optimal link during initialization and optionally transfer their connection to another, more appropriate, link at a later time. Criteria for selecting links may include, for example, power usage, signal-to-noise ratio, bit error rate, bandwidth, and the like. Other criteria may include, for example, consideration of the application type, the number of base stations visible, location, user level policies, and the like. Wireless link selection unit 228 selects links based on abstracted attributes of the protocols and devices provided by RIM 220. RIM 220 may be pre-configured with default threshold values for some common attributes. Using these thresholds, RPM 206 may specify policies to select appropriate links. RPM 206 may then proactively maintain and update lists of links meeting these criteria. Radio services 208 and other applications may request link selection based on a combination of abstracted attributes, specifying a custom set of threshold values, for example, or relying on the default threshold values. Wireless link selection unit 228 may then parse requests and construct appropriate lists of optimal links.

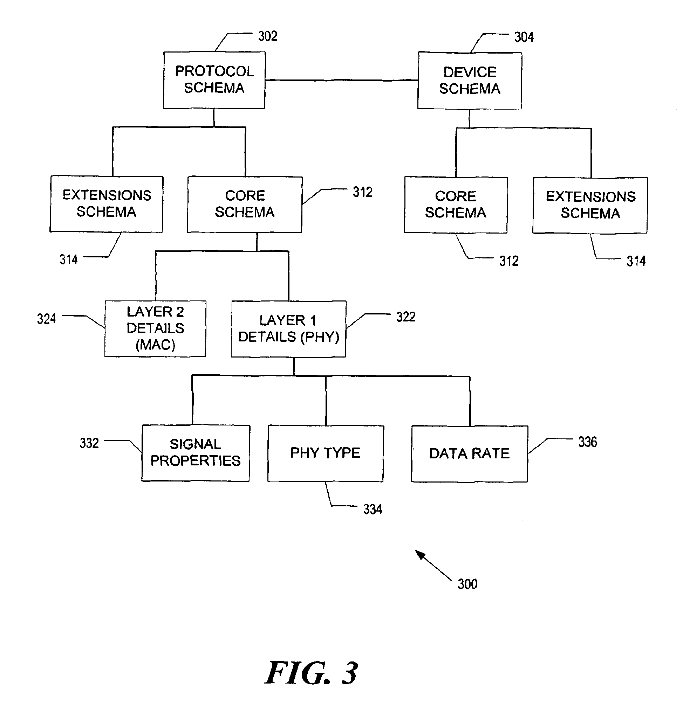

FIG. 3 illustrates an example of a radio information model 300 according to an embodiment of the present invention. RIM 300 includes two components, a protocol schema 302 and a device schema 304. Protocol schema 302 specifies abstracted common of wireless protocols that are operational on a system, for example, supported PHY types, current PHY type, current power mode, base station identification, and the like. Device schema 304 specifies common attributes of the radio hardware present in the system, for example, discrete or reconfigurable radio device, manufacturer information, hardware information, power management information, supported antennas, antenna gains, power amplifier details, and other abstracted attributes specific to wired and wireless devices. Protocol schema 302 and device schema 304 are each further split into, for example, a core schema 312 and extensions schema 314. Core schema 312 of protocol schema 302 (protocol-class schema 312) defines abstracted attributes that are common across all protocols. Extensions schema 314 of protocol schema 302 extend the core schema to define further attributes specific to a particular protocol.

Protocol-class schema 312 may be the base class used to represent instances of all wireless protocols. Protocol-class schema 312 may be composed of two classes, layer 1 details 322 and layer 2 details 324. Layer 1 details 322 may include PHY layer related abstracted attributes of a wireless protocol and layer 2 details 324 may encapsulate all MAC layer abstracted attributes of the wireless protocol. Layer 1 details 322 may be composed of signal properties 332, data rate 334, PHY type 336 and the like.

Extensions schema 304 defines specific attributes that do not exist in core schema 302. Other extensions schema (not shown) may also extend other classes or define new classes if needed.

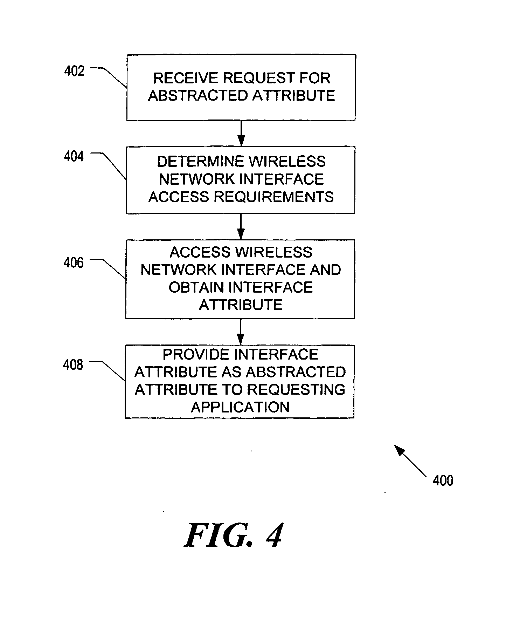

FIG. 4 illustrates a flow diagram according to an embodiment of the present invention. Flow 400 begins with receiving a request for an abstracted attribute of one of wireless network interfaces 202, from, for example, one of radio services 208 or another higher layer application, block 402. The access requirements of the wireless network interface are determined, block 404. The access requirements include, for example, the translation of the abstracted attribute into the protocol or device interface attribute and how the interface attribute is accessed. The wireless network interface is accessed according to the access requirements and the interface attribute is obtained, block 406. The interface attribute is provided to the requesting application as the abstracted attribute, block 408. Thus, each application is not required to understand the specifics of each of the wireless network interfaces and can access attributes of multiple heterogeneous networks in a consistent manner.

The techniques described above may be embodied in a computer-readable medium for configuring a computing system to execute the method. The computer readable media may be permanently, in a removable manner, or remotely coupled to first device 110, second device 120, or another system. The computer readable media may include, for example and without limitation, any number of the following: magnetic storage media including disk and tape storage media; optical storage media such as compact disk media (for example, CD-ROM, CD-R, and the like) and digital video disk storage media; holographic memory; nonvolatile memory storage media including semiconductor-based memory units such as FLASH memory, EEPROM, EPROM, ROM; ferromagnetic digital memories; volatile storage media including registers, buffers or caches, main memory, RAM, and the like; and data transmission media including permanent and intermittent computer networks, point-to-point telecommunication equipment, carrier wave transmission media, the Internet, just to name a few. Other new and various types of computer-readable media may be used to store and/or transmit the software modules discussed herein. Computing systems may be found in many forms including but not limited to mainframes, minicomputers, servers, workstations, personal computers, notepads, personal digital assistants, various wireless devices and embedded systems, just to name a few. A typical computing system includes at least one processing unit, associated memory and a number of input/output (I/O) devices. A computing system processes information according to a program and produces resultant output information via I/O devices.

Realizations in accordance with the present invention have been described in the context of particular embodiments. These embodiments are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the various configurations may be implemented as a combined structure or component. These and other variations, modifications, additions, and improvements may fall within the scope of the invention as defined in the claims that follow.

## Claims

1. A method comprising:
receiving (402) a request from an application for an abstracted attribute of a wireless network interface;
determining (404) access requirements of the wireless network interface;
accessing (406) the wireless network interface and obtaining an interface attribute; and
providing (408) the interface attribute to the application as the abstracted attribute;
**characterised in that** the interface attribute comprises a protocol attribute and/or a device attribute.

2. The method as recited in claim 1, wherein the access requirements comprise translation of the abstracted attribute into the interface attribute and information to access the interface attribute.

3. The method as recited in claim 1, wherein the wireless network interface comprises a device driver and a device.

4. The method as recited in claim 1, wherein the interface attribute comprises an attribute common to a plurality of wireless protocols.

5. The method as recited in claim 1, wherein the interface attribute comprises an attribute common to a plurality of radio hardware.

6. A communication device (110, 120) comprising:
one or more antennas (114, 124);
a plurality of wireless network interfaces (202) via which one or more applications can communicate, the plurality of wireless network interfaces coupled to the one or more antennas; and
a radio interface manager (204) to abstract interface attributes of the plurality of wireless network interfaces into a set of abstracted attributes for access by the one or more applications;
**characterised in that** the interface attributes comprise device attributes and/or protocol attributes.

7. The communication device (110,120) of claim 6, wherein the protocol attributes comprise attributes common to a plurality of wireless protocols.

8. The communication device (110,120) of claim 6, wherein the device attributes comprise attributes common to a plurality of radio hardware.

9. The communication device (110, 120) as recited in claim 6, wherein each of the plurality of wireless network interfaces (202) comprises a device driver and a device (212, 214, 216, 218).

10. The communication device (110, 120) as recited in claim 6, wherein the plurality of wireless network interfaces (202) connect to heterogeneous networks.

11. The communication device (110, 120) as recited in claim 6, further comprising:
a radio policy manager (206) to monitor the abstracted attributes.

12. The communication device (110, 120) as recited in claim 6, the one or more applications comprising one or more radio services to manage the plurality of wireless links.

## Patentansprüche

1. Verfahren, umfassend:
Empfangen (402) einer Anforderung von einer Anwendung eines abstrahierten Attributs einer drahtlosen Netzwerkschnittstelle;
Bestimmen (404) von Zugriffsanforderungen der drahtlosen Netzwerkschnittstelle;
Zugreifen (406) auf die drahtlose Netzwerkschnittstelle und Erhalten eines Schnittstellenattributs; und
Leiten (408) des Schnittstellenattributs zu der Anwendung als das abstrahierte Attribut;
**dadurch gekennzeichnet, dass** das Schnittstellenattribut ein Protokollattribut und/oder ein Geräteattribut umfasst.

2. Verfahren nach Anspruch 1, wobei die Zugriffsanforderungen Übersetzung des abstrahierten Attributs in das Schnittstellenattribut und Informationen zum Zugriff auf das Schnittstellenattribut umfassen.

3. Verfahren nach Anspruch 1, wobei die drahtlose Netzwerkschnittstelle einen Gerätetreiber und ein Gerät umfasst.

4. Verfahren nach Anspruch 1, wobei das Schnittstellenattribut ein Attribut umfasst, das einer Vielzahl von drahtlosen Protokollen gemeinsam ist.

5. Verfahren nach Anspruch 1, wobei das Schnittstellenattribut ein Attribut umfasst, das einer Vielzahl von Funkhardware gemeinsam ist.

6. Kommunikationsgerät (110, 120), umfassend:
eine oder mehrere Antennen (114, 124);
eine Vielzahl von drahtlosen Netzwerkschnittstellen (202) über die eine oder mehrere Anwendungen kommunizieren können, wobei die Vielzahl von drahtlosen Netzwerkschnittstellen mit der einen oder mehreren Antennen gekoppelt ist; und
einen Funkschnittstellenmanager (204) zum Abstrahieren von Schnittstellenattributen der Vielzahl von drahtlosen Netzwerkschnittstellen zu einer Menge abstrahierter Attribute für Zugriff durch die eine oder mehreren Anwendungen;
**dadurch gekennzeichnet, dass** die Schnittstellenattribute Geräteattribute und/oder Protokollattribute umfassen.

7. Kommunikationsgerät (110, 120) nach Anspruch 6, wobei die Protokollattribute Attribute umfassen, die einer Vielzahl von drahtlosen Protokollen gemeinsam sind.

8. Kommunikationsgerät (110, 120) nach Anspruch 6, wobei die Geräteattribute Attribute umfassen, die einer Vielzahl von Funkhardware gemeinsam sind.

9. Kommunikationsgerät (110, 120) nach Anspruch 6, wobei jede der Vielzahl von drahtlosen Netzwerkschnittstellen (202) einen Gerätetreiber und ein Gerät (212, 214, 216, 218) umfasst.

10. Kommunikationsgerät (110, 120) nach Anspruch 6, wobei die Vielzahl von drahtlosen Netzwerkschnittstellen (202) an heterogene Netzwerke angeschlossen sind.

11. Kommunikationsgerät (110, 120) nach Anspruch 6, ferner umfassend:
einen Funkrichtlinienmanager (206) zum Überwachen der abstrahierten Attribute.

12. Kommunikationsgerät (110, 120) nach Anspruch 6, wobei die eine oder mehreren Anwendungen einen oder mehrere Funkdienste zum Verwalten der Vielzahl von drahtlosen Strecken umfassen.

## Revendications

1. Procédé comprenant :
la réception (402) depuis une application d'une requête d'attribut extrait d'une interface réseau sans fil ;
la détermination (404) d'exigences de sollicitation de l'interface réseau sans fil ;
la sollicitation (406) de l'interface réseau sans fil et l'obtention d'un attribut d'interface ; et
la fourniture (408) à l'application de l'attribut d'interface comme attribut extrait ;
**caractérisé en ce que** l'attribut d'interface comprend un attribut de protocole et/ou un attribut de dispositif.

2. Procédé selon la revendication 1, dans lequel les exigences d'accès de sollicitation comprennent la traduction de l'attribut abstrait en l'attribut d'interface et informations pour solliciter l'attribut d'interface.

3. Procédé selon la revendication 1, dans lequel l'interface réseau sans fil comprend un pilote de dispositif et un dispositif.

4. Procédé selon la revendication 1, dans lequel l'attribut d'interface comprend un attribut commun à une pluralité de protocoles sans fil.

5. Procédé selon la revendication 1, dans lequel l'attribut d'interface comprend un attribut commun à une pluralité de matériels radio.

6. Dispositif de communication (110, 120) comprenant
une ou plusieurs antennes (114, 124) ;
une pluralité d'interfaces réseau sans fil (202) par l'intermédiaire desquelles une ou plusieurs applications peuvent communiquer, la pluralité d'interfaces réseau sans fil étant couplée aux une ou plusieurs antennes ; et
un gestionnaire d'interface radio (204) pour extraire des attributs d'interface de la pluralité d'interfaces de réseau sans fil en un ensemble d'attributs extraits en vue de leur sollicitation par les une ou plusieurs applications ; **caractérisé en ce que** les attributs d'interface comprennent des attributs de dispositif et/ou des attributs de protocole.

7. Dispositif de communication (110, 120) selon la revendication 6, dans lequel les attributs de protocole comprennent des attributs communs à une pluralité de protocoles sans fil.

8. Dispositif de communication (110, 120) selon la revendication 6, dans lequel les attributs de dispositif comprennent des attributs communs à une pluralité de matériels radio.

9. Dispositif de communication (110, 120) selon la revendication 6, dans lequel chacun de la pluralité d'interfaces réseau sans fil (202) comprend un pilote de dispositif et un dispositif (212, 214, 216, 218).

10. Dispositif de communication (110, 120) selon la revendication 6, dans lequel la pluralité d'interfaces réseau sans fil (202) se connecte à des réseaux hétérogènes.

11. Dispositif de communication (110, 120) selon la revendication 6, comprenant en outre :
un gestionnaire de stratégies radio (206) pour contrôler les attributs extraits.

12. Dispositif de communication (110, 120) selon la revendication 6, les une ou plusieurs applications comprenant un ou plusieurs services radio pour gérer la pluralité de liaisons sans fil.
